# EUROPEAN PATENT SPECIFICATION

(11) **EP 1 099 466 B1**
(45) Date of publication and mention of the grant of the patent: **05.01.2005**
(21) Application number: 00123055.6
(22) Date of filing: 24.10.2000
(51) Int. Cl.: B01D 53/94, B01J 23/58

(54) **Catalyst for purifiying exhaust gas comprising a complex oxide of platinum and alkaline earth metal**
Abgaskatalysator enthaltend ein Mischoxid aus Platin und Erdalkalimetall
Catalyseur de traitement des gaz d'échappement comprenant un oxyde mixte de platine et de métal alcalino-terreux

(30) Priority: 09.11.1999 JP 31853999
(43) Date of publication of application: 16.05.2001
(73) Proprietor: TOYOTA JIDOSHA KABUSHIKI KAISHA, Toyota-shi, Aichi-ken 471-8571 (JP)
(72) Inventor: Kuno, Oji, c/o Toyota Jidosha K. K., Toyota-shi, Aichi-ken, 471-8571 (JP); Tsuji, Shinji, c/o Toyota Jidosha K. K., Toyota-shi, Aichi-ken, 471-8571 (JP)
(74) Representative: Leson, Thomas Johannes Alois, Dipl.-Ing.

(56) References cited:
- EP-A- 0 754 494
- EP-A- 0 787 522
- EP-A- 1 016 448
- US-A- 4 001 143
- US-A- 5 849 659
- US-A- 5 910 466

## Description

### BACKGROUND OF THE INVENTION

### 1. Field of the Invention

This invention relates to a catalyst intended to purify an exhaust gas from an internal combustion engine such as automobile engine and, in particular, to an improved catalyst having a superior high-temperature resistance.

### 2. Description of the Related Art

Conventionally, a three way catalyst has generally been utilized for purifying an exhaust gas from an internal combustion engine such as an automobile engine. Such a three way catalyst is usually comprised of a carrier formed from inorganic oxide such as alumina and a noble metal such as platinum supported on the carrier.

Recently, an improved catalyst, having a superior high-temperature resistance, that can maintain a purifying capability even if the temperature of the catalyst rises to over 1000°C, is required as a novel engine having a high performance has been developed.

However, in a conventional catalyst comprising platinum particles on an alumina carrier, the purifying capability is damaged by a phenomena called sintering, i.e. the platinum particles are agglomerated together to form an enlarged particle and the active surface area of platinum particles is decreased.

To avoid such a sintering problem, EP-A-0 754 494 proposes a catalyst, for purifying an exhaust gas, containing a platinum complex oxide such as Y₄PtO₆ (Y = Ca, Sr, Ba, Mg), or SrY"PtO₆ (Y" = Co, Ni, Cu). In such platinum complex oxide, platinum is incorporated into the chemical structure of the platinum complex oxide, and the specific chemical structure of the platinum complex oxide is stable even at a high temperature. Therefore, the catalyst employing the platinum complex oxide can maintain such a configuration that the platinum element is fixed in the molecule of the platinum complex oxide, and the catalyst can essentially provide a superior high-temperature resistance.

However, it has been found that the small platinum particles become enlarged particles, the active surface area of platinum is decreased and the catalyst performance comes down when the temperature of the catalyst rises over 800°C.

In view of that, EP-A-0754 494 proposes mixing a catalytic support oxide with the platinum complex oxide. The catalytic support oxide is preferably a complex oxide comprising a first oxide selected from the group of alumina, silica, titania and zirconia and a second oxide having an alkaline earth metal element or a lanthanoid element with a composition ratio of Y:M = 1:0.3 to 1:20 (Y: Ca, Sr, Ba, Mg, La, Ce, Pr; M = Al, Si, Ti, Zr). Although the alkaline earth metal element in the platinum complex oxide and the first oxide in the catalytic support oxide tend to react so that Pt precipitates in the course of endurance running, this reaction can be restricted because the catalytic support oxide itself is a complex oxide. Among others, it is proposed to mix 1.95 g Sr₃CoPtO₆ with 48.05 g CaO-SiO₂ (Ca:Si = 1:0,3) or to mix 1.25 g Sr₃CoPtO₆ with 48.05 g SrO-ZrO₂ (Sr:Zr = 1:1).

### SUMMARY OF THE INVENTION

It is an object of this invention to maintain the essentially superior high-temperature resistance of the platinum complex oxide while providing a large Pt amount on the surface area and, in particular, to provide a heat-resistant catalyst for purifying an exhaust gas that can exhibit a superior purifying capability even at a temperature over 1000°C.

In order to attain the above object, the present invention provides a catalyst according to claim 1.

In the catalyst according to this invention, a specific metal oxide is disposed between a carrier for an inorganic oxide and the platinum complex oxide whereby the platinum complex oxide exists on the metal oxide and does not directly contact the carrier. As the result, the metal oxide provides a barrier effect for the platinum complex oxide whereby a reaction between the carrier of inorganic oxide and the platinum complex oxide can be substantially inhibited.

The carrier for an inorganic oxide is prepared from a material which has a physical configuration substantially stable in nature even at a high temperature of over 1000°C. In the combination of the inorganic oxide carrier and the metal oxide, the carrier provides an effect of maintaining the physical configuration at a high temperature, and the metal oxide on the carrier provides an effect of preventing the reaction between the platinum complex oxide and the carrier of inorganic oxide. Thereby, the combination of the carrier and the metal oxide can provide the platinum complex oxide with a new carrier that is physically and chemically stable even at a high temperature.

The metal oxide layer may be of any configuration provided that the metal oxide is disposed between the carrier and the platinum complex oxide covers all of the surface of the carrier, and prevents direct contact between the carrier and the platinum complex oxide. The platinum complex oxide may also be of any configuration, such as a layer or particles, provided that the platinum complex oxide is disposed on the metal oxide.

Preferably, the platinum complex oxide is disposed as a layer that covers substantially all of the surface of the metal oxide layer such that the platinum complex oxide has as large a surface area as possible.

### BRIEF DESCRIPTION OF THE DRAWINGS

Further objects and advantages of the invention will become apparent from the following description and claims, and from the accompanying drawings, wherein:
Fig. 1 is a schematic drawing of a catalyst model according to this invention.
Fig. 2 is a schematic drawing of a prior catalyst model.
Fig. 3 is a chart that shows an analytical result by means of X-ray electron spectroscopy.
Fig. 4 is a partially enlarged cross sectional view of a catalyst according to this invention.

### DETAILED DESCRIPTION OF THE PREFERRED EMBODIMENTS

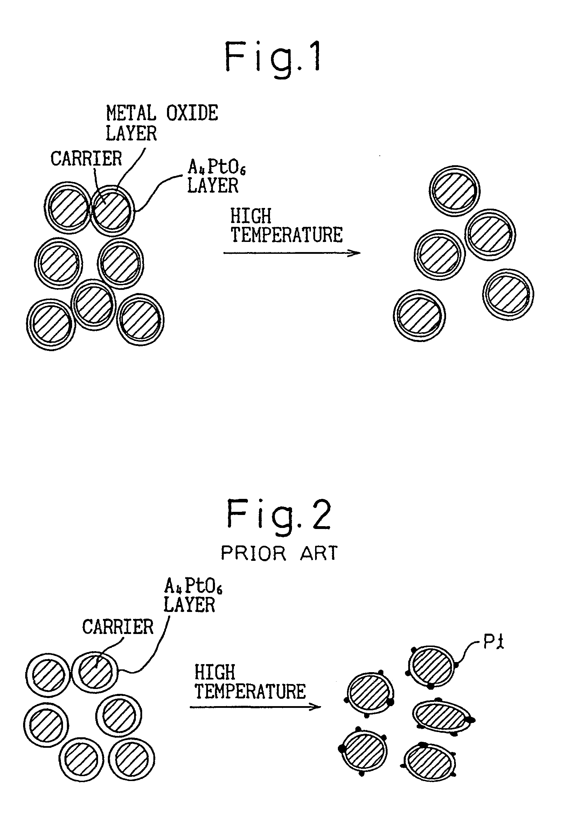

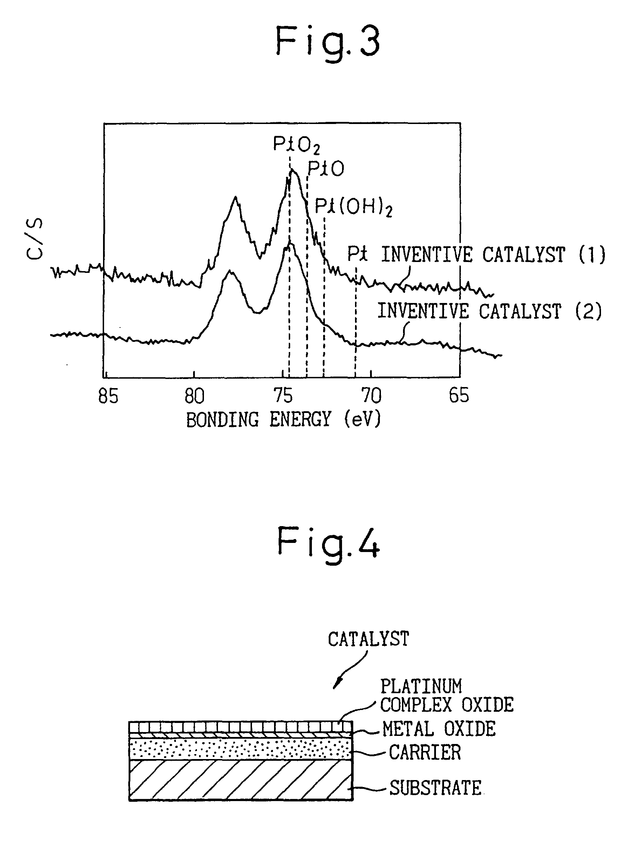

An embodiment of the catalyst according to this invention and the prior catalyst are shown schematically, in Figs. 1 and 2 respectively, in order to make clear the present invention. Fig. 1 shows that the catalyst according to this invention, wherein a metal oxide layer is interposed between a carrier and a layer of platinum complex oxide, does not undergo an alteration of the catalyst configuration even after exposure to a high temperature atmosphere for a long time. On the contrary, Fig. 2 shows that in the catalyst of prior art, wherein a layer of platinum complex oxide is directly supported on a carrier, platinum particles become enlarged particles and are deposited on a catalyst surface after the catalyst has been exposed to a high temperature atmosphere for a long time.

The material of the carrier is selected from inorganic oxide that can provide a stable physical configuration even at a high temperature. Particularly, ceramic material is preferably selected from alumina, silica, titania, zirconia or silica-alumina having a high specific surface area and a very small configuration so as to provide a large surface area to contact with an exhaust gas.

Preferably, alumina, in particular, activated alumina, is selected for the inorganic oxide of the carrier because activated alumina has a high surface area and a very small configuration, and maintains such a configuration even at a high temperature of over 1000°C. The platinum complex oxide carried on the activated alumina can maintain a finely distributed condition and have a large contact area with an exhaust gas. Preferably, the activated alumina to be employed has a specific surface area of over 50 m²/g, more preferably over 100 m²/g, most preferably over 150 m²/g.

In the catalyst according to this invention, the metal of the metal oxide layer is selected from the group consisting of Mg, Ca, Sr, Ba, La and Ce, i.e. the metal oxide layer can be MgO, CaO, SrO, BaO, La₂O₃ or CeO₂.

In a preferred embodiment of this invention, alumina is employed as the carrier of the inorganic oxide and, when the metal oxide is expressed as XOₘ (1 ≦ m ≦ 2), the mole ratio XOₘ/Al₂O₃ is 1 to 10, preferably 2 to 10. If the mole ratio is below one, the intended effect that inhibits the reaction of the platinum complex oxide with the carrier is not sufficient, whereas if the mole ratio is above ten, the fine configuration of the alumina carrier is buried within the metal oxide whereby the contact area of the catalyst with the exhaust gas tends to be decreased.

When the metal oxide layer is present in a form of a thin layer that covers all of the surface of the carrier having a high surface area, the combined configuration of the metal oxide layer and the carrier can provide a new carrier having a fine configuration. In order to develop such a thin layer of metal oxide, the surface of the carrier is entirely wetted by a precursor of the metal oxide such as metal salt or organic metal compound and, then, the precursor is converted into the metal oxide in site by a calcination step for example.

In a preferred embodiment of this invention, the catalyst comprises a layer of platinum complex oxide on the metal oxide layer. The "platinum complex oxide", that substantially constitutes the layer of platinum complex oxide, is an inorganic compound containing both platinum and alkaline earth elements in each molecule of the inorganic compound. Such a platinum complex oxide exhibits a superior high-temperature resistance and provides a suitable catalytic effect, and the reaction with the carrier of the inorganic oxide can be effectively inhibited by the metal oxide.

In a preferred embodiment of this invention, the platinum complex oxide is a chemical species expressed as a chemical formula Y₄PtO₆, wherein Y is an alkaline earth metal, and the platinum complex oxide specifically includes Mg₄PtO₆, Ca₄PtO₆, Sr₄PtO₆, Ba₄PtO₆ or mixtures thereof, for example.

In another preferred embodiment of this invention, the platinum complex oxide is a chemical species expressed as a chemical formula Y'₄₋ₙY"ₙPtO₆, wherein 0 < n ≦ 1, Y' is at least one element selected from alkaline earth metals, and Y" is at least one element selected from Co, Ni, Cu or Fe, specifically the platinum complex oxide includes Mg_{3.5}Co_{0.5}PtO₆, Ca_{3.5}Co_{0.5}PtO₆, Sr₃FePtO₆, Ba₃NiPtO₆ or mixtures thereof, for example.

When the metal oxide is present between the carrier of inorganic oxide and the platinum complex oxide, it is found that the platinum element of the platinum complex oxide, having the above chemical formula and containing tetravalent platinum, can be inhibited from sintering and the chemical structure can be maintained even when exposed to a high-temperature atmosphere.of an exhaust gas over 1000°C such as about 1200°C. That is, it is found that the platinum complex oxide, having the above chemical formula and containing tetravalent platinum element, can provide a superior high-temperature resistance without being caused a substantial change in its chemical structure if the platinum complex oxide is combined with the metal oxide defined in this invention.

Preferably, the metal X in the metal oxide is the same as the Y in the platinum complex oxide, or the metal X in the metal oxide is the same as the Y' in the platinum complex oxide. In such a case, it is found that the reaction between the platinum complex oxide and the carrier of the inorganic oxide can be inhibited more effectively.

An example of a process to form the layer of the platinum complex oxide on the inorganic oxide layer is firstly to prepare a precursor solution of the intended platinum complex oxide. The precursor solution is prepared so as to contain the elements of the platinum complex oxide in a predetermined proportion. Then, the metal oxide layer on the carrier is impregnated by the precursor solution to form a thin layer of the precursor, then the thin layer is calcinated in an oxidizing atmosphere at a temperature of 800 to 1000°C and, then, the layer of the platinum complex oxide is formed on the metal oxide layer.

Further, in such a process, the reaction between the precursor of the platinum complex oxide and the carrier of inorganic oxide can be prevented and a desired layer of platinum complex oxide can be formed in the calcination step since the metal oxide is present between the inorganic oxide and the precursor.

In a case that the inventive catalyst for purifying an exhaust gas is utilized for a catalyst of a monolithic type such as a honeycomb type, for example, the inventive catalyst is formed having three layers on a monolithic substrate, as shown in Fig. 4.

The following examples further illustrate the present invention in detail.

### Example

The weight percent of platinum was 1.25 wt% based on the total weight of platinum complex oxide or platinum metal, metal oxide and inorganic oxide in every Example.

### Example 1

In this example, a catalyst is exemplified comprising Sr₄PtO₆ for platinum complex oxide, SrO for a metal oxide and Al₂O₃ for a carrier of inorganic oxide. This catalyst was prepared as follows:

To 200 ml of deionized water 62.27 grams of strontium nitrate Sr(NO₃)₂ was added and stirred to form an aqueous solution. To the solution 15.0 grams of an activated alumina powder (commercial γ-Al₂O₃, specific surface area of about 180 m²/g) was added and stirred for two hours, then heated to evaporate the water and to form a powder. Then the powder was calcinated in an air at 600°C for three hours to form a powder comprised of γ-Al₂O₃ and SrO.

Then to 100 grams of 2-propanol, dehydrated by molecular sieve for overnight, 2.109 grams of strontium diisopropoxide Sr(OC₃H₇)₂ and 1.008-grams of platinum diacetylacetonato Pt(acac)₂ were added to form a solution, then the above 40 grams of powder was added to the solution, and the slurry was stirred and refluxed at 70°C for two hours. To the slurry 2.0 grams of deionized water was added and maintained at 70°C for 4 hours to cause a hydrolysis.

Then the slurry was filtered and dried at 120°C to form a powder. The powder was calcinated in an air at 900°C for three hours to form an inventive catalyst (1). In this catalyst (1), the mole ratio SrO/Al₂O₃ was 2.0.

### Example 2

In this example, a catalyst is exemplified comprising Ba₄PtO₆ for platinum complex oxide, BaO for metal oxide and Al₂O₃ for a carrier. This catalyst was prepared as follows:

To 500 ml of deionized water 51.26 grams of Barium nitrate Ba(NO₃)₂ was added and stirred to form a solution. To the solution 10.0 grams of an activated alumina powder (commercial γ-Al₂O₃, specific surface area of about 180 m²/g) was added and stirred for two hours, then heated to evaporate water and to form a powder. Then the powder was calcinated in an air at 600°C for three hours to form a powder comprised of γ-Al₂O₃ and BaO.

To 100 grams of 2-propanol, dehydrated by a molecular sieve overnight, 2.2913 grams of barium diisopropoxide Ba(OC₃H₇)₂ and 1.008 grams of platinum diacetylacetonato Pt(acac)₂ were added to form a solution, then 40.0 grams of the above powder was added to the solution, and the slurry was stirred and refluxed at 70°C for two hours. To the slurry 2.0 grams of deionized water was added and maintained at 70°C for 4 hours to cause a hydrolysis.

Then, in the same manner as in Example 1, an inventive catalyst (2) was obtained after calcinating at 900°C. In this catalyst (2), the mole ratio BaO/Al₂O₃ was 2.0.

### Example 3

In this example, a catalyst is exemplified comprising Ca₄PtO₆ for platinum complex oxide, CaO for metal oxide and Al₂O₃ for a carrier.

An inventive catalyst (3) was prepared in the same manner as in Example 1, except that calcium nitrate and calcium diisopropoxide were employed instead of strontium nitrate and strontium diisopropoxide respectively. In this catalyst (3), the mole ratio CaO/Al₂O₃ was 5.0.

### Example 4

In this example, a catalyst is exemplified comprising Mg₄PtO₆ for platinum complex oxide, MgO for metal oxide and Al₂O₃ for a carrier.

An inventive catalyst (4) was prepared in the same manner as in Example 1, except that magnesium nitrate hexahydrate and magnesium diisopropoxide were employed instead of strontium nitrate and strontium diisopropoxide respectively. In this catalyst (4), the mole ratio MgO/Al₂O₃ was 3.0.

### Example 5

In this example, a catalyst is exemplified comprising Sr₄PtO₆ for platinum complex oxide, BaO for metal oxide and Al₂O₃ for a carrier.

An inventive catalyst (5) was prepared in the same manner as in Example 1, except that barium nitrate was employed instead of strontium nitrate. In this catalyst (5), the mole ratio BaO/Al₂O₃ was 2.0.

### Example 6

In this example, a catalyst is exemplified comprising Ba₄PtO₆ for platinum complex oxide, CeO for metal oxide and Al₂O₃ for a carrier.

An inventive catalyst (6) was prepared in the same manner as in Example 2, except that cerium nitrate hexahydrate was employed instead of barium nitrate. In this catalyst (6), the mole ratio CeO/Al₂O₃ was 2.0.

### Example 7

In this example, a catalyst is exemplified comprising Ba₄PtO₆ for platinum complex oxide, La₂O₃ for metal oxide and Al₂O₃ for a carrier.

An inventive catalyst (7) was prepared in the same manner as in Example 2, except that lanthanum nitrate hexahydrate was employed instead of barium nitrate. In this catalyst (7), the mole ratio LaO_{3/2}/Al₂O₃ was 2.0.

### Example 8

In this example, a catalyst is exemplified comprising Sr₃NiPtO₆ for platinum complex oxide, SrO for metal oxide and Al₂O₃ for a carrier.

A SrO layer was formed on Al₂O₃ in the same manner as in the inventive catalyst (1) of Example 1.

Then, to 100 grams of 2-propanol, dehydrated by a molecular sieve overnight, 3.1914 grams of strontium diisopropoxide Sr(OC₃H₇)₂, 1.3280 grams of nickel pentanedionato Ni(C₅H₇O₂)₂ and 1.008 grams of platinum diacetylacetonato Pt(acac)₂ were added to form a solution, then 40.0 grams of the above SrO/Al₂O₃ powder was added to the solution, and the slurry was stirred and refluxed at 70°C for two hours. To the slurry 2.0 grams of deionized water was added and maintained at 70°C for 4 hours to cause a hydrolysis.

Then the slurry was filtered and dried at 120°C to form a powder. The powder was calcinated in an air at 900°C for three hours to form an inventive catalyst (8). In this catalyst (8), the mole ratio SrO/Al₂O₃ was 2.0.

### Comparative Example 1

In this example, a catalyst is exemplified comprising platinum Pt and Al₂O₃ for a carrier.

To 200 ml of deionized water an aqueous Pt dinitrodiamine nitrate solution (4.0 wt% of Pt) and 40.0 grams of an activated alumina powder (γ-Al₂O₃, specific surface area of about 180 m²/g) was added and stirred for two hours, then heated at 120°C to evaporate water to form a powder. Then the powder was calcinated in an air at 500°C for one hour to form a comparative catalyst (1).

### Comparative Example 2

In this example, a catalyst is exemplified comprising platinum Pt and magnesium aluminate MgAl₂O₄ for a carrier of inorganic oxide.

A comparative catalyst (2) was prepared in the same manner as in Comparative Example 1, except that MgAl₂O₄ (commercially available, specific surface area of about 25 m²/g) was employed instead of γ-Al₂O₃.

### Comparative Example 3

In this example, a catalyst is exemplified comprising Ba₄PtO₆ for platinum complex oxide and Al₂O₃ for a carrier.

To 200 grams of 2-propanol, dehydrated by a molecular sieve overnight, 2.864 grams of barium diisopropoxide Ba(OC₃H₇)₂ and 1.260 grams of platinum diacetylacetonato Pt(acac)₂ were added to form a solution, then 50.0 grams of an activated alumina powder (γ-Al₂O₃, specific surface area of about 180 m²/g) was added to the solution, and the slurry was stirred and refluxed at 70°C for two hours. To the slurry 1.0 gram of deionized water was added and maintained at 70°C for 4 hours to cause a hydrolysis.

Then, the slurry was filtered and dried at 120°C to form a powder. The powder was calcinated in an air at 900°C for three hours to form a comparative catalyst (3).

### Comparative Example 4

In this example, a catalyst is exemplified comprising Sr₄PtO₆ for platinum complex oxide and magnesium aluminate MgAl₂O₄ for a carrier.

A comparative catalyst (4) was prepared in the same manner as in Comparative Example 3, except that strontium diisopropoxide and MgAl₂O₄ (commercially available, specific surface area of about 25 m²/g) were employed instead of magnesium diisopropoxide and γ-Al₂O₃ respectively.

### Comparative Example 5

In this example, a catalyst is exemplified comprising Ba₄PtO₆ for platinum complex oxide and ceria CeO₂ for a carrier.

A comparative catalyst (5) was prepared in the same manner as in Comparative Example 3, except that CeO₂ (commercially available, specific surface area of about 25 m²/g) was employed instead of γ-Al₂O₃.

### Comparative Example 6

In this example, a catalyst is exemplified comprising Ba₄PtO₆ for platinum complex oxide and barium aluminate BaAl₂O₄ for a carrier.

To 200 grams of 2-propanol, dehydrated by a molecular sieve overnight, 96.32 grams of barium diisopropoxide Ba(OC₃H₇)₂ and 144.9 grams of aluminum triisopropoxide Al(OC₃H₇)₃ were added to form a solution, then the solution was stirred and refluxed at 70°C for two hours. Then 10.0 grams of deionized water was added to the solution and the solution was further stirred and refluxed at 70°C for two hours to form a slurry. The resultant slurry was filtered and dried at 120°C to form a powder. The powder was calcinated in an air at 900°C for three hours to form a powder of BaAl₂O₄.

A comparative catalyst (6) was prepared in the same manner as in Comparative Example 3, except that the above BaAl₂O₄ was employed instead of γ-Al₂O₃.

### Comparative Example 7

In this example, a catalyst is exemplified comprising platinum Pt and barium aluminate BaAl₂O₄ for a carrier.

A BaAl₂O₄ powder was prepared in the same manner as in Comparative Example 6, and a comparative catalyst (7) was prepared in the same manner as in Comparative Example 1, except that the BaAl₂O₄ was employed instead of γ-Al₂O₃.

### Comparative Example 8

In this example, a catalyst is exemplified comprising Sr₃NiPtO₆ for platinum complex oxide and Al₂O₃ for a carrier.

A comparative catalyst (8) was prepared in the same manner as in Comparative Example 3, except that strontium diisopropoxide Sr(OC₃H₇)₂ was employed instead of barium diisopropoxide Ba(OC₃H₇)₂.

### EVALUATION TEST

The respective inventive catalysts (1) to (8) and comparative catalysts (1) to (8) were isostatically pressed at a room temperature and crushed into pellets of 1.0 to 1.7 mm diameter. The resultant pellets were placed into an equipment for testing a high-temperature resistance at normal pressure and flow-through condition, and a test for a high-temperature resistance was carried out under a model atmosphere wherein the air/fuel ratio was switched between 14/1 and 16/1 for every one minute.

The respective 2.0 grams of catalyst after the resistance test was disposed in a reaction equipment of normal pressure and flow-through type, a model gas of a stoichometric atmosphere was introduced into the catalyst at a flow rate of 5.0 litre per minute.

The results were shown in Table 1. In Table 1, catalyst temperatures are summarized for the respective catalysts, wherein the catalyst temperature means the temperature at which 50% of hydrocarbon (HC) or NO was purified (hereinafter, the temperature is expresses as "T50"). In a case that a catalyst activity is relatively high, the catalyst provides an effect to purify HC or NO at a relatively low temperature, therefore T50 is relatively low.

From the results of T50 shown in Table 1, the effect of a metal oxide layer on the T50 is evident, since, when compared with the inventive catalyst (2) and the comparative catalyst (3), the inventive catalyst (6) and the comparative catalyst (3), the inventive catalyst (7) and the comparative catalyst (3), and the inventive catalyst (8) and the comparative catalyst (8), the values of T50 are significantly lower in the inventive catalysts compared with the comparative catalysts.

The comparative catalysts of (2), (4), (6) and (7), wherein these catalysts comprise the aluminum complex oxide including aluminum along with the metal of the metal oxide, exhibit higher T50 than those of inventive catalysts of (2) to (6) as a whole. From the results, it is understood that the separate existence of the carrier of inorganic oxide and the metal oxide layer is preferred for low T50 rather than the complex compound of the elements including the inorganic oxide and the metal oxide.

By comparing the inventive catalyst (6) and the comparative catalyst (5), it is understood that the existence of an inorganic layer results in lower T50, i.e. a higher purifying capability.

It is shown that the inventive catalysts (5) to (7), wherein the metal element of the metal oxide and the metal element of the platinum complex compound are different each other, do not exhibit a much higher T50 than those of inventive catalysts (1) to (4) and (8), wherein the metal element of the metal oxide and the metal element of the platinum complex compound are the same.

It is shown that the inventive catalyst (8), wherein the platinum complex oxide includes two metal elements, do not exhibit a much higher T50 than those of inventive catalysts (1) to (7), wherein the platinum complex oxide include one metal element.

From the results that the inventive catalyst (1) exhibits a lower T50 than those of comparative catalysts (1), (2) and (7), the platinum complex compound, including tetravalent platinum, exhibits a higher resistance performance than the catalyst including platinum metal.

### Analysis

The analytical result of X-ray electron spectroscopy is shown in Fig. 3 for the inventive catalysts (1) and (2) after the resistance performance test. As shown in Fig. 3, the valance of the platinum is 4, i.e. the valence was maintained even after the high-temperature resistance test. From the results, it is understood that the molecular structure can be maintained even after the resistance test, and the configuration that the platinum element is incorporated in the molecular structure of platinum complex oxide is preserved.

As described above, the present invention provides a high-temperature resistance catalyst that can maintain a catalyst performance even at a temperature of above 1000°C.

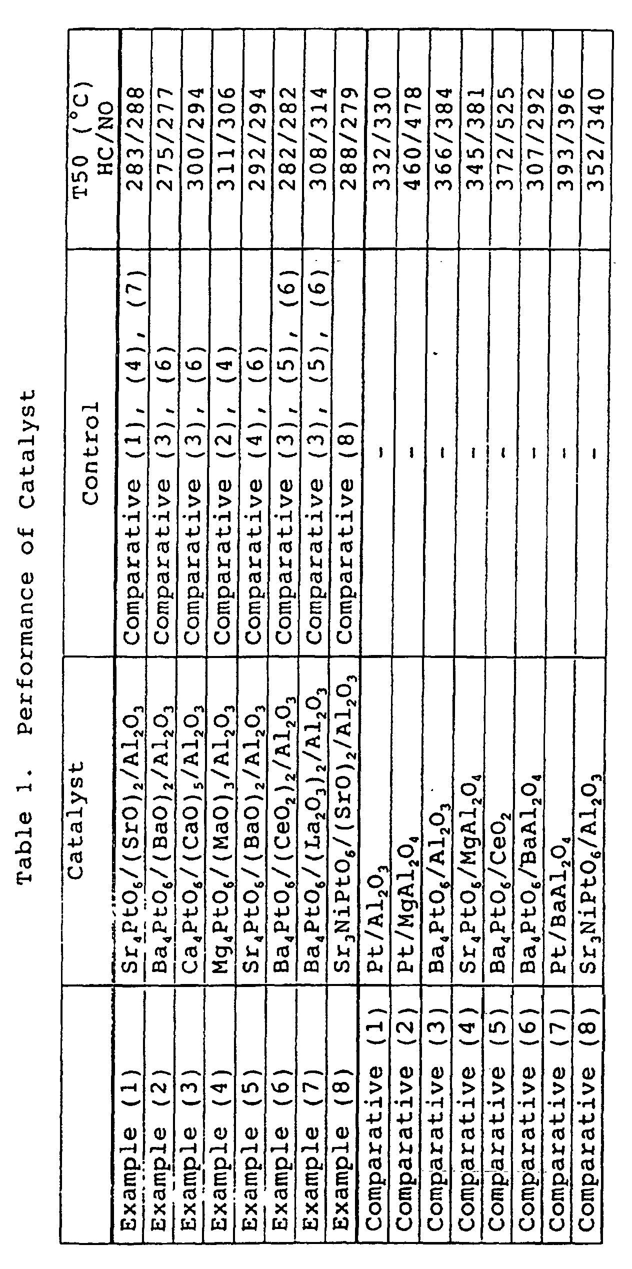

## Claims

1. A catalyst for purifying an exhaust gas, comprising:
a carrier of inorganic oxide selected from alumina, silica, titania, zirconia or silica-alumina;
platinum complex oxide, wherein the platinum complex oxide is a chemical species expressed as a chemical formula Y₄PtO₆, wherein Y is an alkaline earth metal, or a chemical species expressed as a chemical formula Y'₄₋ₙY"ₙPtO₆, wherein 0 < n ≤ 1, Y' is at least one element selected from alkaline earth metals, and Y" is at least one element selected from the group consisting of Co, Ni, Cu and Fe; and
metal oxide, wherein the metal of the metal oxide is one element selected from the group consisting of Mg, Ca, Sr, Ba, La and Ce, and wherein the metal oxide is a layer disposed between the carrier and the platinum complex oxide and covering all of the surface of the carrier to prevent direct contact between the carrier and the platinum complex oxide.

2. The catalyst according to claim 1, wherein said platinum complex oxide is disposed as a layer on said metal oxide layer.

3. The catalyst according to claim 1 or 2, wherein said carrier consists of alumina Al₂O₃, and the mole ratio XOₘ/Al₂O₃ is 1 to 10, the metal oxide being expressed as XOₘ, 1 ≤ m ≤ 2.

4. The catalyst according to any one of claims 1 to 3, wherein said platinum complex oxide is a chemical species expressed as a chemical formula Y₄PtO₆, wherein Y is an alkaline earth metal.

5. The catalyst according to any one of claims 1 to 3, wherein said platinum complex oxide is a chemical species expressed as a chemical formula Y'₄₋ₙY"ₙPtO₆, wherein 0 < n ≤ 1, Y' is at least one element selected from alkaline earth metals, and Y" is at least one element selected from the group consisting of Co, Ni, Cu and Fe.

6. The catalyst according to any one of claims 1 to 5, wherein platinum content is 0.5 to 2.0 wt% based on the total weight of the carrier, the platinum complex oxide and the metal oxide.

## Patentansprüche

1. Katalysator zur Reinigung eines Abgases, mit:
einem Träger aus anorganischem Oxid, das aus Aluminiumoxid, Siliziumoxid, Titanoxid, Zirconiumoxid oder Siliziumoxid-Aluminiumoxid gewählt ist;
Platinmischoxid, das einer chemischen Art, die durch die chemische Formel Y₄PtO₆ angegeben wird, wobei Y ein Erdalkalimetall ist, oder einer chemischen Art entspricht, die durch die chemische Formel Y'₄₋ₙY"ₙPtO₆ angegeben wird, wobei 0 < n ≤ 1 gilt, Y' mindestens ein Element ist, das aus Erdalkalimetallen gewählt ist, und Y" mindestens ein Element ist, das aus der aus Co, Ni, Cu und Fe bestehenden Gruppe gewählt ist; und
Metalloxid, wobei das Metall des Metalloxids ein Element ist, das aus der aus Mg, Ca, Sr, Ba, La und Ce bestehenden Gruppe gewählt ist, und das Metalloxid eine Schicht ist, die sich zwischen dem Träger und dem Platinmischoxid befindet und die gesamte Oberfläche des Trägers bedeckt, um direkten Kontakt zwischen dem Träger und dem Platinmischoxid zu verhindern.

2. Katalysator nach Anspruch 1, bei dem das Platinmischoxid auf der Metalloxidschicht als eine Schicht angeordnet ist.

3. Katalysator nach Anspruch 1 oder 2, bei dem der Träger aus Aluminiumoxid Al₂O₃ besteht und das Molverhältnis XOₘ/Al₂O₃ 1 bis 10 beträgt, wobei das Metalloxid als XOₘangegeben wird und 1 ≤ m ≤ 2 gilt.

4. Katalysator nach einem der Ansprüche 1 bis 3, bei dem das Platinmischoxid einer chemischen Art entspricht, die durch die chemische Formel Y₄PtO₆ angegeben wird, wobei Y ein Erdalkalimetall ist.

5. Katalysator nach einem der Ansprüche 1 bis 3, bei dem das Platinmischoxid einer chemischen Art entspricht, die durch die chemische Formel Y'₄₋ₙY"ₙPtO₆ angegeben wird, wobei 0 < n ≤ 1 gilt, Y' mindestens ein Element ist, das aus Erdalkalimetallen gewählt ist, und Y" mindestens ein Element ist, das aus der aus Co, Ni, Cu und Fe bestehenden Gruppe gewählt ist.

6. Katalysator nach einem der Ansprüche 1 bis 5, bei dem der Platingehalt basierend auf dem Gesamtgewicht des Trägers, des Platinmischoxids und des Metalloxids 0,5 bis 2,0 Gew.-% beträgt.

## Revendications

1. Catalyseur de traitement des gaz d'échappement, comprenant :
un support d'oxyde inorganique sélectionné parmi l'alumine, l'oxyde de silicium, le dioxyde de titane, le zircone ou la silice-alumine ;
de l'oxyde mixte de platine, dans lequel l'oxyde mixte de platine est une espèce chimique exprimée sous la forme d'une formule chimique Y₄PtO₆, dans laquelle Y est un métal alcalino-terreux, ou une espèce chimique exprimée sous la forme d'une formule chimique Y'₄₋ₙY''ₙPtO₆, dans laquelle 0 < n ≤ 1, Y' est au moins un élément sélectionné parmi des métaux alcalino-terreux, et Y'' est au moins un élément sélectionné parmi le groupe constitué de Co, Ni, Cu ou Fe ; et
de l'oxyde métallique, dans lequel le métal de l'oxyde métallique est un élément sélectionné parmi le groupe comprenant le Mg, Ca, Sr, Ba, La et Ce, et dans lequel l'oxyde métallique est une couche disposée entre le support et l'oxyde mixte de platine et recouvrant toute la surface du support pour empêcher le contact direct entre le support et l'oxyde mixte de platine.

2. Catalyseur selon la revendication 1, dans lequel ledit oxyde mixte de platine est disposé sous la forme d'une couche sur ladite couche d' oxyde métallique.

3. Catalyseur selon la revendication 1 ou 2, dans lequel ledit support comprend de l'alumine Al₂O₃, et le rapport moléculaire XOₘ/Al₂O₃ est de 1 à 10, l'oxyde métallique étant exprimé par XOₘ, 1 < m ≤ 2.

4. Catalyseur selon l'une quelconque des revendications 1 à 3, dans lequel ledit oxyde mixte de platine est une espèce chimique exprimée sous la forme d'une formule chimique Y₄PtO₆, dans laquelle Y est un métal alcalino-terreux.

5. Catalyseur selon l'une quelconque des revendications 1 à 3, dans lequel ledit oxyde mixte de platine est une espèce chimique exprimée sous la forme d'une formule chimique Y'₄₋ₙY''ₙPtO₆, dans laquelle 0 < n ≤ 1, Y' est au moins un élément sélectionné parmi des métaux alcalino-terreux, et Y'' est au moins un élément sélectionné parmi le groupe constitué de Co, Ni, Cu et Fe.

6. Catalyseur selon l'une quelconque des revendications 1 à 5, dans lequel la teneur en platine est de 0,5 à 2,0 % massique sur la base de la masse totale du support, de l'oxyde mixte de platine et de l'oxyde métallique.
